# EUROPÄISCHE PATENTANMELDUNG

(11) **EP 3 599 190 A1**
(43) Veröffentlichungstag der Anmeldung: **29.01.2020**
(21) Anmeldenummer: 19180458.2
(22) Anmeldetag: 17.06.2019
(51) Int. Cl.: B65G 15/36, B65G 43/02, G01N 21/3581, G01N 21/89

(54) **INSPEKTIONSEINRICHTUNG UND RIEMENANLAGE MIT EINER DERARTIGEN INSPEKTIONSEINRICHTUNG**

(30) Priorität: 26.07.2018 DE 102018212486
(71) Anmelder: ContiTech Transportbandsysteme GmbH, 30165 Hannover (DE)
(72) Erfinder: Wennekamp, Tobias, 30165 Hannover (DE)
(74) Vertreter: Finger, Karsten

(57) **Zusammenfassung**

Die vorliegende Erfindung betrifft eine Inspektionseinrichtung (3) zur zerstörungsfreien Inspektion eines Riemens (2), wobei der Riemen (2) in einer Riemenanlage (1) angeordnet und diese ausgebildet ist, den Riemen (2) in einer Bewegungsrichtung (A) zu bewegen, mit wenigstens einer Strahlungsquelle (30), welche ausgebildet ist, in Richtung des Riemens (2) zumindest abschnittsweise ausreichend energiereiche Strahlung auszusenden, so dass die Strahlung den Riemen (2) durchdringen kann, und mit wenigstens einem Sensorelement (31), welches ausgebildet ist, die durch den Riemen (2) hindurchgedrungene Strahlung zumindest teilweise zu erfassen. Die Inspektionseinrichtung (3) ist dadurch gekennzeichnet, dass die Strahlungsquelle (30) ausgebildet ist, Terahertz-Strahlung auszusenden, und dass das Sensorelement (31) ausgebildet ist, Terahertz-Strahlung zu erfassen.

## Beschreibung

Die vorliegende Erfindung betrifft eine Inspektionseinrichtung zur zerstörungsfreien Inspektion eines Riemens gemäß des Oberbegriffs des Patentanspruchs 1 sowie eine Riemenanlage mit einer derartigen Inspektionseinrichtung gemäß des Patentanspruchs 13.

Auf verschiedenen technischen Gebieten werden Riemen z.B. zur Übertragung von Zugkräften und bzw. oder zum Transport von Fördergut eingesetzt. Ein Riemen kann als ein endlicher Riemen mit zwei Enden ausgebildet sein, jedoch wird ein Riemen üblicherweise als ein sogenannter endloser Riemen ausgebildet, welcher in der Bewegungsrichtung endlos geschlossen ist. Derartige Riemen können beispielsweise für ein Riemengetriebe als ein Rippenriemen, ein Keilriemen oder ein Keilrippenriemen ausgebildet sein. Ist der Riemen als ein Gurtband ausgebildet, so kann der Riemen nach Art eines Bandes, also insbesondere als ein Förderband bzw. Fördergurt oder als ein Transportband bzw. Transportgurt, ausgebildet sein. Der Riemen kann prinzipiell von einem kraftschlüssigen und bzw. oder formschlüssigen Riementyp sein.

Als Förderband oder Fördergurt werden Riemen insbesondere im Bergbau eingesetzt, um große Massen von Gestein und ähnlichen Materialien z.B. innerhalb einer Mine sowie von einer Mine zu einer Verladestation zu transportieren. Derartige Förderanlagen, welche auch als Gurtförderer bezeichnet werden können, können mehrere Kilometer lang sein. Vergleichbare Anwendungen sind in der Industrie zu finden. Verwendet werden dabei üblicherweise Förderbändern aus einen elastomeren Material, in welches in Längsrichtung bzw. in Förderrichtung bzw. in Bewegungsrichtung verlaufende Zugträger wie insbesondere Stahlseile eingebettet sind.

Der Transport sowie insbesondere das Aufgeben des oft scharfkantigen Förderguts auf die Außenseite des Förderbands im Bereich des Obertrums können zu Abnutzungen sowie zu Beschädigungen des Fördergurtes führen. Wird dabei die obere Schicht des elastomeren Materials durchdrungen, so können auch die Zugträger beschädigt und sogar zerstört werden. Auch können Risse und Schlitze den Fördergurt in der Dicke vollkommen durchdringen. In jedem Fall kann der Betrieb der Förderanlage eingeschränkt bis stillgelegt werden, insbesondere falls es zu einem Riss des Fördergurts kommt. Auch können die Umwelt sowie Personen hierdurch gefährdet werden.

Die Produktion im Bergbau und in der Industrie hängt dabei in vielen Branchen unmittelbar von der Zuverlässigkeit und Funktionsfähigkeit der Gurtförderer ab, da ungeplante Ausfälle eines Förderbands zum Stillstand des Gurtförderers und damit zum Stillstand zumindest eines Teils der Mine bzw. der Produktionsanlage führen können, was hohe Kosten durch Produktionsausfälle verursachen kann. Außerdem stellen die Fördergurte oftmals die teuerste Komponente des gesamten Gurtförderers dar und stehen damit im besonderen Fokus der Überwachung und der Instandhaltung.

Der Zustand des Fördergurtes wird heute entweder in regelmäßigen zeitlichen Abständen visuell bzw. manuell oder kontinuierlich durch sog. Monitoring-Systeme erfasst. Dabei wird beispielsweise die Oberfläche des Fördergurtes mittels Laser gescannt und erfasst. Die Kontrolle der Zuträger kann mittels magnetischer Streufeldmessung erfolgen oder es können Röntgengeräte zum Einsatz kommen. Beispiele für den Einsatz von Röntgengeräten zur Überwachung von Fördergurten sind beispielsweise der WO 2011 131 380 A1 und der WO 2012 007 198 A1 zu entnehmen.

Durch den Einsatz der Röntgentechnologie können zwar viele Messgrößen sehr einfach erfasst werden, da neben der Messung des Verschleißzustandes der Deckplatten auch eine Aussage über die Integrität des Zuträgers oder der Verbindungen im Inneren des Gurtmaterials möglich ist.

Für eine umfassende Bewertung des Zustandes eines Fördergurtes sind jedoch üblicherweise mehrere einzelne Monitoring-Systeme erforderlich, die z.B. jeweils einzeln den Zustand der Deckplatten oder des Zuträgers erfassen, so dass eine technische Lösung zur vollständigen Überwachung üblicherweise mehrere spezialisierte Monitoring-Systeme gleichzeitig erfordert. Dies lässt eine vollständige Überwachung eines Fördergurtes oftmals sehr teuer werden. Speziell im industriellen Umfeld werden daher verfügbare Monitoring-Systeme nicht eingesetzt, da die Kosten für diese Monitoring-Systeme in einem schlechten Verhältnis zum Nutzen stehen.

Nachteilig ist bei der Verwendung von Röntgenstrahlung zur Inspektion von Riemen, dass dies zu Gesundheitsgefährdungen von Personen führen kann. Um dies zu vermeiden, können besondere Schutzmaßnahmen wie z.B. Einhausungen erforderlich sein, was einen zusätzlichen Aufwand an Kosten sowie Raum bedeuten kann. Auch kann dies die Zulassung sowie eine Betriebsgenehmigung derartiger Inspektionseinrichtungen erfordern.

Eine Aufgabe der vorliegenden Erfindung ist es, ein Inspektionseinrichtung zur zerstörungsfreien Inspektion eines Riemens der eingangs beschriebenen Art bereit zu stellen, so dass die zuvor beschriebenen Nachteile überwunden oder zumindest reduziert werden können. Insbesondere soll eine Inspektionseinrichtung zur zerstörungsfreien Inspektion eines Riemens geschaffen werden, welche die Qualität der Inspektion mittels Röntgenstrahlung bieten kann, ohne die Nachteile der Verwendung von Röntgenstrahlung aufweisen bzw. diese zumindest zu reduzieren. Alternativ oder zusätzlich soll eine umfangreiche Inspektion mit lediglich einer Inspektionseinrichtung ermöglicht werden können, wo bisher mehrere Inspektionseinrichtungen verwendet werden müssen. Zumindest soll eine Alternative zu bekannten Inspektionseinrichtungen zur zerstörungsfreien Inspektion von Riemen geschaffen werden.

Die Aufgabe wird erfindungsgemäß durch eine Inspektionseinrichtung zur zerstörungsfreien Inspektion eines Riemens mit den Merkmalen gemäß Patentanspruch 1 sowie durch eine Riemenanlage mit den Merkmalen gemäß Patentanspruch 13 gelöst. Vorteilhafte Weiterbildungen sind in den Unteransprüchen beschrieben.

Somit betrifft die vorliegende Erfindung eine Inspektionseinrichtung zur zerstörungsfreien Inspektion eines Riemens, wobei der Riemen in einer Riemenanlage angeordnet und diese ausgebildet ist, den Riemen in einer Bewegungsrichtung zu bewegen, mit wenigstens einer Strahlungsquelle, welche ausgebildet ist, in Richtung des Riemens zumindest abschnittsweise ausreichend energiereiche Strahlung auszusenden, so dass die Strahlung den Riemen durchdringen kann, und mit wenigstens einem Sensorelement, welches ausgebildet ist, die durch den Riemen hindurchgedrungene Strahlung zumindest teilweise zu erfassen.

Die Inspektionseinrichtung ist erfindungsgemäß dadurch gekennzeichnet, dass die Strahlungsquelle ausgebildet ist, Terahertz-Strahlung auszusenden, und dass das Sensorelement ausgebildet ist, Terahertz-Strahlung zu erfassen. Der Riemen kann dabei offen oder endlos geschlossen ausgebildet sein.

Der vorliegenden Erfindung liegt dabei die Erkenntnis zugrunde, dass eine zerstörungsfreie Inspektion eines Riemens alternativ zur Verwendung von Röntgenstrahlung in vergleichbarer oder sogar besserer Qualität durch die Verwendung von Terahertz-Strahlung erreicht werden kann. Bei der Terahertz-Strahlung handelt es sich um eine elektromagnetische Welle, welche im elektromagnetischen Spektrum zwischen der Infrarot-Strahlung und der Mikrowellen-Strahlung liegt. Die Wellenlänge ist kleiner als 1 mm und kann daher auch als Submillimeterwellen bezeichnet werden. Der Frequenzbereich liegt dementsprechend oberhalb von ca. 300 GHz.

Vorteilhaft bei der Verwendung von Terahertz-Strahlung ist, dass sie viele dielektrische Materialien wie z.B. dielektrisch ausgebildete elastomere Materialien durchdringen kann, diese jedoch aufgrund der geringen Photonenenergie, welche üblicherweise im Bereich von wenigen Milli-Elektronenvolt liegt, dabei nicht ionisierend. Hierdurch unterscheidet sich die Terahertz-Strahlung von der Röntgenstrahlung, so dass bei der Verwendung von Terahertz-Strahlung die Nachteile der Röntgenstrahlung wie z.B. mögliche Gesundheitsgefährdungen für Menschen vermieden werden können. Entsprechend kann auf entsprechende Abschirmungen und Schutzmaßnahmen verzichtet werden. Auch können die Zulassung sowie die Erlangung von Betriebsgenehmigungen von Terahertz-Strahlungsquellen einfacher als bei Röntgenquellen oder sogar gar nicht erforderlich sein.

Vorteilhaft kann auch sein, dass mittels Terahertz-Strahlung verschiedene Aspekte eines Riemens mit derselben Technologie inspiziert werden können, wie weiter unten noch beschrieben wird. Dies kann es ermöglichen, mittels einer einzigen Inspektionseinrichtung verschiedene Aspekte eines Riemens zu inspizieren anstelle hierfür jeweils eine separate Inspektionseinrichtung verwenden zu müssen.

Beispielsweise kann aufgrund der nicht erforderlichen Abschirmungen sowie sonstiger Sicherheitsmaßnahmen eine Terahertz-Strahlungsquelle auch kostengünstiger in der Anschaffung, in der Montage, im Transport sowie in der Aufstellung und Inbetriebnahme als eine Röntgenquelle sein. Dies gilt entsprechend für die entsprechende Inspektionseinrichtung als Ganzes.

Vorzugsweise wird von dem Begriff der Terahertz-Strahlung auch die Sub-Terahertz Strahlung umfasst, welche bereits ab ca. 50 GHz beginnt. Dies ist vorteilhaft, da z.B. rußgefüllte elastomere Materialien, welche üblicherweise bei Riemen verwendet werden, von der Sub-Terahertz Strahlung besonders wirkungsvoll durchdrungen werden können.

Gemäß eines Aspekts der vorliegenden Erfindung weist das Sensorelement eine Zeilenkamera auf oder ist als Zeilenkamera ausgebildet. Diesem Aspekt der vorliegenden Erfindung liegt die Erkenntnis zugrunde, dass aufgrund der linearen Bewegung des zu inspizierenden Riemens stets lediglich eine Erfassung eines Abschnitts des Riemens in der Querrichtung, d.h. senkrecht zur Bewegungsrichtung erforderlich ist, um den Riemen als Ganzes fortlaufend zu inspizieren. Dieser in der Querrichtung ausgerichtete Erfassungsbereich des Sensorelements kann in der Bewegungsrichtung ausreichend schmal sein, um mit einer einzigen Zeile von Bilderfassungselementen des Sensorelements als Zeilenkamera erfasst zu werden, welche im Gegensatz zu Flächenkameras eine vergleichsweise hohe Auflösung aufweisen können. Hierdurch kann eine vergleichsweise hohe Auflösung und damit genaue Erfassung des Riemens bzw. der diesen durchdringenden Terahertz-Strahlung erreicht werden, was zu einer entsprechend hohen Qualität der Inspektion führen kann.

Gemäß eines weiteren Aspekts der vorliegenden Erfindung ist das Sensorelement senkrecht zur Bewegungsrichtung des Riemens, vorzugsweise senkrecht zur größten flächigen Erstreckung des Riemens, ausgerichtet. Unter der größten flächigen Erstreckung des Riemens ist eine Seite des Riemens zu verstehen, welche in kartesischen Koordinaten betrachtet die größte Erstreckung im Vergleich zu den übrigen Seiten aufweist. Dies sind üblicherweise zwei einander gegenüberliegende Seiten, welche sich senkrecht zur Bewegungsrichtung erstrecken und durch rechtwinkelig hierzu ausgerichtete Kanten voneinander getrennt sind. Diese Seiten können auch als Außenseite und als Innenseite bezeichnet werden.

Auf diese Art und Weise kann eine Durchdringung der Terahertz-Strahlung durch eine vergleichsweise dünne Erstreckung des Riemens erreicht werden, was den Aufwand und damit auch die Kosten der Terahertz-Strahlungsquelle geringhalten kann. Dies kann auch für den Energieaufwand gelten, welcher für die Erzeugung der Terahertz-Strahlung erforderlich sein kann. Auch kann eine vergleichsweise flächige Inspektion des Riemens erreicht werden.

Gemäß eines weiteren Aspekts der vorliegenden Erfindung sind die Strahlungsquelle und das Sensorelement senkrecht zur Bewegungsrichtung des Riemens über dessen gesamte Breite oder abschnittsweise ausgebildet und angeordnet. Mit anderen Worten kann der Riemen entweder in der Querrichtung über seine gesamte Erstreckung von einer Kombination von Strahlungsquelle und Sensorelement inspiziert werden oder dies erfolgt lediglich über einen Abschnitt.

Eine Inspektion mit lediglich einer Kombination von Strahlungsquelle und Sensorelement kann den Aufwand geringer halten, jedoch nur für Riemen mit einer gewissen geringen Breite möglich sein. Zumindest kann der Aufwand der Inspektion überproportional im Vergleich zur Breite des Riemens ansteigen. Daher kann es bei vergleichsweise breiten Riemen vorteilhaft sein, lediglich einen Teil in der Breite zu inspizieren. Dies kann z.B. der mittlere Bereich sein, welcher üblicherweise am deutlichen beansprucht wird und somit einem erhöhten Inspektionsbedarf unterliegen kann. Es können jedoch auch mehrere Kombinationen von Strahlungsquellen und Sensorelementen verwendet werden, welche sowohl in der Querrichtung als auch in der Bewegungsrichtung derart zueinander versetzt angeordnet sind, dass jeweils ein zumindest im Wesentlichen anderer Abschnitt des Riemens inspiziert werden kann. Die hierbei erhaltenen Messdaten bzw. Auswertungen können anschließend zu gemeinsamen Messdaten bzw. zu einem gemeinsamen Auswertungsergebnis zusammengeführt werden, als wenn eine einzelne Kombination von Strahlungsquelle und Sensorelement verwendet worden wäre.

Gemäß eines weiteren Aspekts der vorliegenden Erfindung ist die Strahlungsquelle auf einer ersten Seite des Riemens und das Sensorelement auf der gegenüberliegenden zweiten Seite des Riemens angeordnet. Dies kann eine möglichst vollständige Durchdringung des Riemens und damit eine möglichst vollständige Inspektion durch den Riemen hindurch ermöglichen.

Gemäß eines weiteren Aspekts der vorliegenden Erfindung ist die Strahlungsquelle auf der Außenseite des Riemens und das Sensorelement auf der Innenseite des Riemens angeordnet. In diesem Fall wird von einem endlos geschlossenen Riemen ausgegangen. Dabei die üblicherweise größere Terahertz-Strahlungsquelle außenliegend und das üblicherweise vergleichsweise kleine Sensorelement innenliegend zum endlos geschlossenen Riemen anzuordnen kann den Größenverhältnissen entsprechen und die Anordnung sowie Ausgestaltung der Terahertz-Strahlung vereinfachen sowie ggfs. kostengünstiger werden lassen.

Gemäß eines weiteren Aspekts der vorliegenden Erfindung weist die Inspektionseinrichtung wenigstens eine Auswerteeinheit auf, welche ausgebildet ist, Daten der erfassten Terahertz-Strahlung von dem Sensorelement zu erhalten, wobei die Auswerteeinheit ferner ausgebildet ist, einen Zustand des Riemens aus den erhaltenen Daten zu ermitteln. Hierdurch können die zuvor beschriebenen Vorteile umgesetzt werden, wie im Folgenden noch näher beschrieben wird.

Die Ermittlung des Zustands des Riemens aus den erhaltenen Daten kann auch die Möglichkeit der Auswerteeinheit umfassen, den Zustand des Riemens sowie ggfs. weitere aus den erhaltenen Daten gewonnene Informationen und Erkenntnisse darzustellen, zu speichern und bzw. oder einem Benutzer und bzw. oder einer weiteren Vorrichtung zu berichten. Dies kann vorzugsweise als Software-Funktion umgesetzt werden und die Möglichkeiten der Auswertung bzw. der Nutzung der erhaltenen Daten und bzw. oder der Auswertungserkenntnisse erweitern.

Insbesondere kann die Auswerteeinheit derartige Daten als Bericht über die Verwendung bzw. die Laufzeit des Riemens speichern und einem Benutzer und bzw. oder einer weiteren Vorrichtung zur Verfügung stellen. Dies kann Merkmale des Riemens wie z.B. Verbindungen, Reparaturen und dergleichen umfassen.

Vorzugsweise kann die Auswerteeinheit auch dazu ausgebildet sein, aus den erhaltenen Daten Zustände des Riemens in Form von Schäden zu erkennen und diese zu klassifizieren. Dies kann die Erkennung von Schäden vereinfachen und insbesondere eine Reaktion auf einen erkannten Schaden beschleunigen, um z.B. eine Vergrößerung des Schadens sowie einen Ausfall des Riemens zu vermeiden. Je später ein Schaden erkannt wird, desto aufwendiger kann dessen Behebung sein. Insbesondere kann jeglicher Stillstand einer Riemenanlage, ob aufgrund einer Reparatur des Riemens oder aufgrund eines entsprechenden Schadens des Riemens, zu erheblichen Kosten gerade aufgrund von Ausfallzeiten führen.

Hierbei kann es auch vorteilhaft sein, den Zustand des Riemens über die Länge des Riemens zu ermitteln und entsprechend zu speichern, darzustellen und dergleichen. Dies kann den ortsbezogenen Vergleich aktuelle Inspektionsergebnisse mit vorangehenden Inspektionen derselben Stellen des Riemens ermöglichen, um z.B. neue Schäden festzustellen und bzw. oder das Fortschreiten der Abnutzung und dergleichen erkennen zu können. Für eine derartige ortsbezogene Betrachtung des Riemens kann die Verwendung von Markern z.B. in Form vom RFID-Transpondern vorteilhaft sein, um die Positionen entlang des Riemens sicher bestimmen zu können.

Gemäß eines weiteren Aspekts der vorliegenden Erfindung ist die Auswerteeinheit ausgebildet, aus einem Absorptionsgrad der erfassten Terahertz-Strahlung in Relation zur ausgesendeten Strahlung auf eine Materialdicke des Riemens zu schließen. Dies kann es ermöglichen, z.B. einen Abrieb des Riemens zu erkennen. Aus dem Maß des Abriebs kann auf die Zulässigkeit eines weiteren Betriebs des Riemens geschlossen werden. Diese Information kann z.B. für eine Planung einer Wartung bzw. eines Austausches des Riemens verwendet werden (sog. Predictive Maintenance). Auch können hierdurch Schadstellen wie z.B. Materialausbrüche oder Risse einer inspizierten Oberfläche des Riemens sowie Schlitze durch den Riemen hindurch erkannt werden. Ebenso kann dies für die o.g. Zwecke genutzt werden. Auch können diese Informationen zum Anhalten des Riemens verwendet werden, falls aus dem erkannten Abrieb bzw. aus den erkannten Schadstellen geschlussfolgert wird, dass ein weiterer Betrieb des Riemens unzulässig ist. Dies kann jeweils durch die Auswerteeinheit und bzw. oder durch eine nachgeordnete Steuerungseinheit oder dergleichen selbsttätig erfolgen und bzw. oder durch einen Benutzer erkannt und bzw. oder veranlasst werden.

Gemäß eines weiteren Aspekts der vorliegenden Erfindung weist der Riemen wenigstens einen Zugträger, vorzugsweise eine Mehrzahl von Zugträgern, vorzugsweise als Stahlseil, auf, welcher sich zumindest abschnittsweise in der Bewegungsrichtung des Riemens erstreckt, wobei die Auswerteeinheit ausgebildet ist, aus einem Absorptionsgrad der er-fassten Terahertz-Strahlung in Relation zur ausgesendeten Strahlung auf die Integrität des Zugträgers zu schließen. Auf diese Art und Weise kann eine Inspektion dieser Merkmale eines derartigen Riemens wie zuvor beschrieben erfolgen.

Gemäß eines weiteren Aspekts der vorliegenden Erfindung ist der Zugträger in einen Riemenkörper des Riemens eingebettet. Dies kann eine wirksame Kraftübertragung zwischen dem Riemenkörper und dem Zugträger ermöglichen, so dass der Zugträger seine Funktion möglichst wirkungsvoll erfüllen kann.

Gemäß eines weiteren Aspekts der vorliegenden Erfindung ist die Auswerteeinheit ausgebildet, aus einem Absorptionsgrad der erfassten Terahertz-Strahlung in Relation zur ausgesendeten Strahlung auf die Integrität einer Verbindungsstelle des Riemens, vorzugsweise des Zugträgers des Riemens, zu schließen. Auf diese Art und Weise kann eine Inspektion dieser Merkmale eines derartigen Riemens wie zuvor beschrieben erfolgen. Eine Verbindungsstelle kann dabei insbesondere durch eine Anordnung der Enden des Zugträgers in der Querrichtung parallel nebeneinander überlappend und deren Einbettung im Material des Riemens bzw. eines Riemenkörpers erfolgen. Da eine derartige Verbindung eine Schwachstelle des Riemens darstellt und im Laufe des Betriebs teilweise bis vollständig in der Bewegungsrichtung nachgeben kann, kann eine Überwachung einer derartigen Verbindungsstelle vorteilhaft sein, um ein sich anbahnendes Reißen des Riemens an dieser Stelle rechtzeitig zu erkennen und die Riemenanlage vorher anzuhalten.

Gemäß eines weiteren Aspekts der vorliegenden Erfindung weist der Riemen einen Riemenkörper auf, welcher ein elastomeres Material aufweist, vorzugsweise aus einem elastomeren Material ausgebildet ist. Dies kann die Ausbildung eines elastischen Riemens erlauben, was insbesondere bei der Anwendung eines endlos geschlossenen Riemens vorteilhaft sein kann.

Gemäß eines weiteren Aspekts der vorliegenden Erfindung ist der Riemen ein Fördergurt und die Riemenanlage ist eine Förderanlage, wobei die Inspektionseinrichtung angeordnet ist, den Fördergurt an einer fördergutfreien Stelle der Förderanlage zu inspizieren. Hierdurch kann vermieden werden, dass die Terahertz-Strahlung auch das Fördergut durchdringen muss, was den Einsatz zusätzlicher Energie erfordern sowie das Ergebnis der Inspektion beeinträchtigen könnte.

Die vorliegende Erfindung betrifft auch eine Riemenanlage mit wenigstens einem Riemen, wobei die Riemenanlage ausgebildet ist, den Riemen in einer Bewegungsrichtung zu bewegen, und mit wenigstens einer Inspektionseinrichtung wie zuvor beschrieben. Mittels einer derartigen Riemenanlage können die zuvor beschriebenen Eigenschaften und Vorteile angewendet und genutzt werden. Die Riemenanlage kann vorzugsweise ein Riemengetriebe wie z.B. eine Aufzugsanlage eines Fahrstuhls oder dergleichen sein, um dort eine erfindungsgemäße Inspektion des Riemens z.B. als Aufzugsriemen vornehmen zu können. Auch kann die Riemenanlage eine Förderanlage bzw. ein Gurtförderer sein mit einem Riemen als Fördergurt bzw. als Förderband sein, da auch bei derartigen Anwendungen eine erfindungsgemäße Inspektion des Fördergurts bzw. des Förderbands vorteilhaft sein kann.

Zwei Ausführungsbeispiele und weitere Vorteile der Erfindung werden nachstehend im Zusammenhang mit den folgenden Figuren erläutert. Darin zeigt:
- Fig. 1: eine schematische perspektivische Darstellung eines Riemens zur Verwendung mit einer erfindungsgemäßen Inspektionseinrichtung;
- Fig. 2: einen schematischen Längsschnitt durch den Riemen der Fig. 1 im Bereich einer Verbindungsstelle;
- Fig. 3: eine schematische seitliche Darstellung einer Riemenanlage als Aufzugsanlage mit einem Riemen und einer erfindungsgemäßen Inspektionseinrichtung; und
- Fig. 4: eine schematische seitliche Darstellung einer Riemenanlage als Förderanlage mit einem Riemen und einer erfindungsgemäßen Inspektionseinrichtung.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

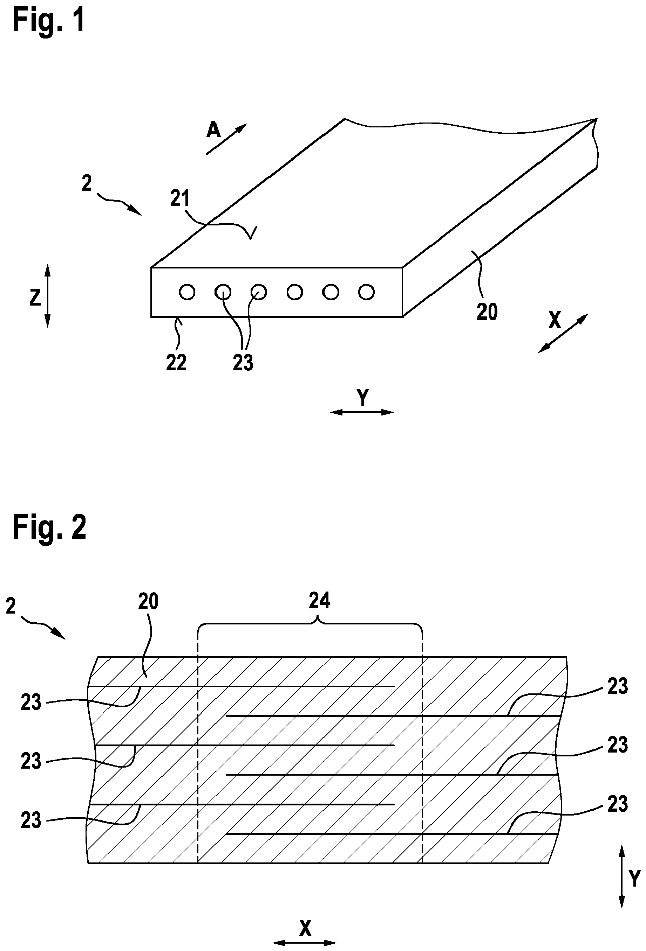

Fig. 1 zeigt eine schematische perspektivische Darstellung eines Riemens 2 zur Verwendung mit einer erfindungsgemäßen Inspektionseinrichtung 3. Fig. 2 zeigt einen schematischen Längsschnitt durch den Riemen 2 der Fig. 1 im Bereich einer Verbindungsstelle 24.

Der Riemen 2 weist einen Riemenkörper 20 auf, welcher aus einem elastomeren Material wie vorzugsweise aus Gummi ausgebildet ist. Der Riemenkörper 20 weist eine erste Seite 21 und eine zweite Seite 22 auf, welche sich in den Koordinaten des Riemens 2 flächig in der Längsrichtung X sowie in der Querrichtung Y parallel zueinander erstrecken. Wird der Riemen 2 endlos geschlossen, so kann die erste Seite 21 als Außenseite 21 des Riemenkörpers 20 und die zweite Seite 22 als Innenseite des Riemenkörpers 20 bezeichnet werden. Innerhalb des Riemenkörpers 20 sind mehrere parallel zueinander in der Längsrichtung X des Riemens 2 verlaufende Zugträger 23 in Form von Stahlseilen 23 angeordnet. Der Riemen 2 ist über eine Verbindungsstelle 24 endlos geschlossen, indem die Enden der Stahlseile 23 in diesem Bereich parallel zueinander sowie einander überlappend angeordnet und gemeinsam im elastomeren Material des Riemenkörpers 20 einvulkanisiert sind.

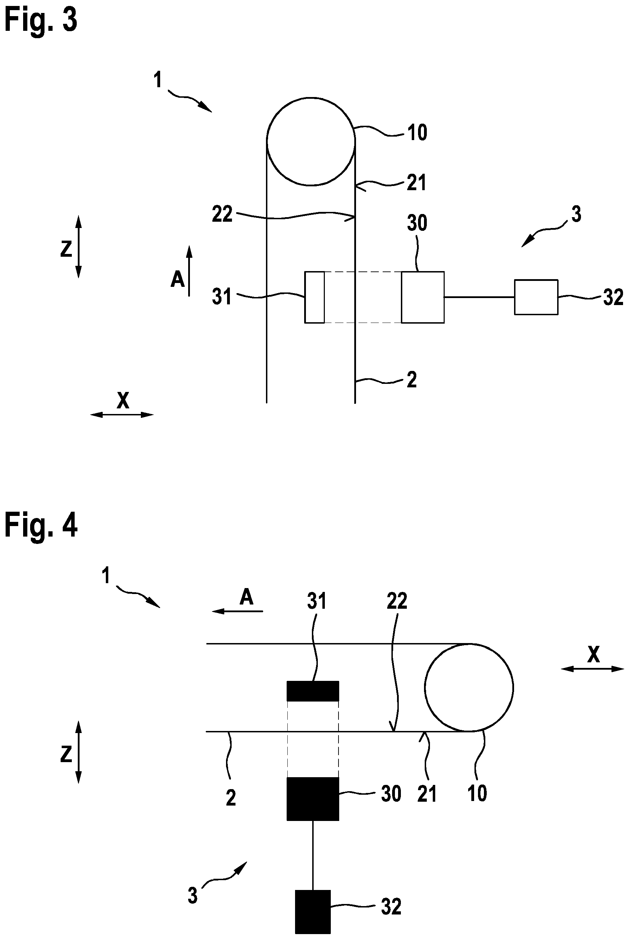

Fig. 3 zeigt eine schematische seitliche Darstellung einer Riemenanlage 1 als Aufzugsanlage 1 mit einem Riemen 2 und einer erfindungsgemäßen Inspektionseinrichtung 3. Der Riemen 2 kann in diesem Fall auch als Aufzugsriemen 2 bezeichnet werden. Der Aufzugsriemen 2 umläuft eine Trommel 10 der Aufzugsanlage 1 und wird von der Trommel 10 in der Höhe Z gehalten. Die Trommel 10 kann auch als Rolle 10 bezeichnet werden. Die Trommel 10 kann eine Antriebstrommel 10 sein, welche den Aufzugsriemen 2 in einer Bewegungsrichtung A sowie entgegen der Bewegungsrichtung A antreiben kann.

Eine erfindungsgemäße Inspektionseinrichtung 3 ist auf der rechten Seite des Aufzugsriemens 2 gemäß der Darstellung der Fig. 3 angeordnet. Eine Terahertz-Strahlungsquelle 30 ist außenliegend zum Aufzugsriemen 2 angeordnet, da hier mehr Platz zur Anordnung der Terahertz-Strahlungsquelle 30 zur Verfügung steht. Die Terahertz-Strahlungsquelle 30 ist senkrecht auf die Außenseite 21 des Riemenkörpers 20 ausgerichtet. Der Terahertz-Strahlungsquelle 30 in der Längsrichtung X in den Koordinaten der Aufzugsanlage 1 gegenüberliegend ist ein Sensorelement 31 in Form einer Zeilenkamera 31 angeordnet. Sowohl die Terahertz-Strahlungsquelle 30 als auch das Sensorelement 31 erstrecken sich ausreichend über die Breite des Aufzugsriemens 2, um diesen in der Querrichtung vollständig zu inspizieren, wie nachfolgend erläutert wird.

Die Terahertz-Strahlungsquelle 30 ist dazu ausgebildet, im Betrieb ausreichend energiereiche Terahertz-Strahlung zu erzeugen und in Richtung der Außenseite 21 des Aufzugsriemens 2 auszusenden, so dass die Terahertz-Strahlung den Riemenkörper 20 des Aufzugsriemens 2 in der Richtung seiner Höhe Z, vgl. Fig. 1, durchdringen kann. Gleichzeitig ist die Zeilenkamera 31 dazu ausgebildet, die durch den Riemenkörper 20 des Aufzugsriemens 2 hindurchgedrungene Strahlung zu erfassen. Hierzu ist die Zeilenkamera 31 in der Koordinaten der Aufzugsanlage 1 in dessen Querrichtung Y ausgerichtet. Die erfassten Sensordaten können dann in einer Auswerteeinheit 32 ausgewertet werden. Die Auswerteeinheit 32 kann gleichzeitig der Steuerung sowie der Energieversorgung der Terahertz-Strahlungsquelle 30 und der Zeilenkamera 31 dienen.

Erfindungsgemäß kann auf diese Art und Weise Terahertz-Strahlung anstelle von Röntgenstrahlung zur zerstörungsfreien Inspektion von Riemen 2 z.B. als Aufzugsriemen 2 eingesetzt werden. Hierdurch können nicht nur wenigstens vergleichbare Inspektionsergebnisse wie beim Einsatz von Röntgenstrahlung erzielt und dabei die Nachteile der Röntgenstrahlung wie z.B. die Gesundheitsgefährdung von Menschen, zusätzliche Schutzmaßnahmen sowie der entsprechende Aufwand der Zulassung und Betriebszulassung vermieden werden. Gleichzeitig können verschiedene Inspektionsmaßnahmen wie die Oberflächeninspektion und die Inspektion der Zugträger 23 insbesondere im Bereich von Verbindungsstellen 24 mit ein und derselben Inspektionseinrichtung 3 ausgeführt werden. Dies kann den Aufwand mehrerer zu kombinierender Inspektionseinrichtungen 3 vermeiden.

Fig. 4 zeigt eine schematische seitliche Darstellung einer Riemenanlage 1 als Förderanlage 1 mit einem Riemen 2 und einer erfindungsgemäßen Inspektionseinrichtung 3. In diesem Fall ist der Riemen 2 als Fördergurt 2 bzw. als Förderband 2 ausgebildet und in den Koordinaten der Förderanlage 1 im Wesentlichen horizontal ausgerichtet. Die Förderanlage 1 kann auch als Gurtförderer 1 bezeichnet werden. Die erfindungsgemäße Inspektionseinrichtung 3 ist dabei in ihren Koordinaten in der Höhe Z unterhalb der Förderanlage 1 angeordnet, so dass der Fördergurt 2 im Bereich des Untertrums erfindungsgemäß inspiziert werden kann, wenn der Fördergurt 2 materialfrei ist. Auch in diesem Fall erstrecken sich die Terahertz-Strahlungsquelle 30 als auch das Sensorelement 31 ausreichend über die Breite des Fördergurts 2, um diesen in der Querrichtung wie zuvor beschrieben vollständig zu inspizieren.

### Bezugszeichenliste (Teil der Beschreibung)

- A: Bewegungsrichtung
- X: Längsrichtung; Tiefe
- Y: Querrichtung; Breite
- Z: vertikale Richtung; Höhe

- 1: Riemenanlage; Riemengetriebe; Aufzugsanlage; Förderanlage; Gurtförderer
- 10: Trommel; Rolle

- 2: Riemen; Aufzugsriemen; Fördergurt; Förderband
- 20: Riemenkörper
- 21: erste Seite bzw. Außenseite des Riemenkörpers 20
- 22: zweite Seite bzw. Innenseite des Riemenkörpers 20
- 23: Zugträger; Stahlseile
- 24: Verbindungsstelle

- 3: Inspektionseinrichtung
- 30: Terahertz-Strahlungsquelle
- 31: Sensorelement; Zeilenkamera
- 32: Auswerteeinheit

## Patentansprüche

1. Inspektionseinrichtung (3) zur zerstörungsfreien Inspektion eines Riemens (2), wobei der Riemen (2) in einer Riemenanlage (1) angeordnet und diese ausgebildet ist, den Riemen (2) in einer Bewegungsrichtung (A) zu bewegen,
mit wenigstens einer Strahlungsquelle (30), welche ausgebildet ist, in Richtung des Riemens (2) zumindest abschnittsweise ausreichend energiereiche Strahlung auszusenden, so dass die Strahlung den Riemen (2) durchdringen kann, und
mit wenigstens einem Sensorelement (31), welches ausgebildet ist, die durch den Riemen (2) hindurchgedrungene Strahlung zumindest teilweise zu erfassen, **dadurch gekennzeichnet, dass**
die Strahlungsquelle (30) ausgebildet ist, Terahertz-Strahlung auszusenden, und dass das Sensorelement (31) ausgebildet ist, Terahertz-Strahlung zu erfassen.

2. Inspektionseinrichtung (3) nach Anspruch 1, **dadurch gekennzeichnet, dass** das Sensorelement (31) eine Zeilenkamera (31) aufweist oder als Zeilenkamera (31) ausgebildet ist.

3. Inspektionseinrichtung (3) nach Anspruch 1 oder 2, **dadurch gekennzeichnet, dass** das Sensorelement (31) senkrecht zur Bewegungsrichtung (A) des Riemens (10), vorzugsweise senkrecht zur größten flächigen Erstreckung des Riemens (10), ausgerichtet ist.

4. Inspektionseinrichtung (3) nach einem der vorangehenden Ansprüche, **dadurch gekennzeichnet, dass**
die Strahlungsquelle (30) und das Sensorelement (31) senkrecht zur Bewegungsrichtung (A) des Riemens (10) über dessen gesamte Breite oder abschnittsweise ausgebildet und angeordnet sind.

5. Inspektionseinrichtung (3) nach einem der vorangehenden Ansprüche, **dadurch gekennzeichnet, dass**
die Strahlungsquelle (30) auf einer ersten Seite (21) des Riemens (2) und das Sensorelement (31) auf der gegenüberliegenden zweiten Seite (22) des Riemens (2) angeordnet ist.

6. Inspektionseinrichtung (3) nach einem der vorangehenden Ansprüche, **dadurch gekennzeichnet, dass**
die Strahlungsquelle (30) auf der Außenseite (21) des Riemens (2) und das Sensorelement (31) auf der Innenseite (22) des Riemens (2) angeordnet ist.

7. Inspektionseinrichtung (3) nach einem der vorangehenden Ansprüche, **gekennzeichnet durch**
wenigstens eine Auswerteeinheit (32), welche ausgebildet ist, Daten der erfassten Terahertz-Strahlung von dem Sensorelement (31) zu erhalten,
wobei die Auswerteeinheit (32) ferner ausgebildet ist, einen Zustand des Riemens (2) aus den erhaltenen Daten zu ermitteln.

8. Inspektionseinrichtung (3) nach Anspruch 6, **dadurch gekennzeichnet, dass** die Auswerteeinheit (32) ausgebildet ist, aus einem Absorptionsgrad der erfassten Terahertz-Strahlung in Relation zur ausgesendeten Strahlung auf eine Materialdicke des Riemens (2) zu schließen.

9. Inspektionseinrichtung (3) nach Anspruch 6 oder 7, **dadurch gekennzeichnet, dass** der Riemen (2) wenigstens einen Zugträger (23), vorzugsweise eine Mehrzahl von Zugträgern (23), vorzugsweise als Stahlseil (23), aufweist, welcher sich zumindest abschnittsweise in der Bewegungsrichtung (A) des Riemens (2) erstreckt,
wobei die Auswerteeinheit (32) ausgebildet ist, aus einem Absorptionsgrad der erfassten Terahertz-Strahlung in Relation zur ausgesendeten Strahlung auf die Integrität des Zugträgers (23) zu schließen.

10. Inspektionseinrichtung (3) nach Anspruch 8, **dadurch gekennzeichnet, dass** der Zugträger (23) in einen Riemenkörper (20) des Riemens (2) eingebettet ist.

11. Inspektionseinrichtung (3) nach einem der Ansprüche 6 bis 9, **dadurch gekennzeichnet, dass**
die Auswerteeinheit (32) ausgebildet ist, aus einem Absorptionsgrad der erfassten Terahertz-Strahlung in Relation zur ausgesendeten Strahlung auf die Integrität einer Verbindungsstelle (24) des Riemens (2), vorzugsweise des Zugträgers (23) des Riemens (2), zu schließen.

12. Inspektionseinrichtung (3) nach einem der vorangehenden Ansprüche, **dadurch gekennzeichnet, dass**
der Riemen (2) einen Riemenkörper (20) aufweist, welcher ein elastomeres Material aufweist, vorzugsweise aus einem elastomeren Material ausgebildete ist.

13. Inspektionseinrichtung (3) nach einem der vorangehenden Ansprüche, **dadurch gekennzeichnet, dass**
der Riemen (2) ein Fördergurt (2) und die Riemenanlage (1) eine Förderanlage (1) ist,
wobei die Inspektionseinrichtung (3) angeordnet ist, den Fördergurt (2) an einer fördergutfreien Stelle der Förderanlage (1) zu inspizieren.

14. Riemenanlage (1)
mit wenigstens einem Riemen (2),
wobei die Riemenanlage (1) ausgebildet ist, den Riemen (2) in einer Bewegungsrichtung (A) zu bewegen, und
mit wenigstens einer Inspektionseinrichtung (3) nach einem der vorangehenden Ansprüche.
